# EUROPÄISCHE PATENTSCHRIFT

(11) **EP 0 924 037 B1**
(45) Veröffentlichungstag und Bekanntmachung des Hinweises auf die Patenterteilung: **22.12.2010**
(21) Anmeldenummer: 98122991.7
(22) Anmeldetag: 03.12.1998
(51) Int. Cl.: B27C 1/08, B27C 9/04, B27C 5/02

(54) **Kehlmaschine**
Molding machine
Moulurière

(30) Priorität: 18.12.1997 DE 19756280
(43) Veröffentlichungstag der Anmeldung: 23.06.1999
(73) Patentinhaber: Michael Weinig Aktiengesellschaft, D-97941 Tauberbischofsheim (DE)
(72) Erfinder: Englert, Heinrich, 97922 Lauda-Königshofen (DE)
(74) Vertreter: Kohl, Karl-Heinz

(56) Entgegenhaltungen:
- EP-A- 0 267 156
- EP-A- 0 293 329
- EP-A- 0 768 142
- DE-A1- 3 541 236
- DE-C- 854 699
- DE-U- 9 320 449
- DE-U- 9 422 037
- US-A- 5 257 199
- PATENT ABSTRACTS OF JAPAN vol. 010, no. 231 (M-506), 12. August 1986 (1986-08-12) -& JP 61 065710 A (SHINKO KOGYO KK), 4. April 1986 (1986-04-04)
- PATENT ABSTRACTS OF JAPAN vol. 007, no. 203 (M-241), 8. September 1983 (1983-09-08) -& JP 58 102650 A (TOYOTA JIDOSHA KOGYO KK), 18. Juni 1983 (1983-06-18)

## Beschreibung

Die Erfindung betrifft eine Kehlmaschine nach dem Oberbegriff des Anspruches 1. Eine solche Maschine ist aus der DE 854 699-C bekannt.

Kehlmaschinen haben mehrere Spindeln, die jeweils Werkzeuge zur Bearbeitung von Werkstücken aus Holz, Kunststoff und dergleichen tragen. Die Werkstücke werden an den Spindeln vorbeigeführt, deren Werkzeuge die Werkstücke bearbeiten. Häufig müssen Werkzeuge ausgewechselt werden, um beispielsweise andere Profilmesser einzusetzen oder Werkzeuge mit anderen Breiten einsetzen zu können. Die Werkzeuge sitzen auf Spindelzapfen und sind mit Spannmuttern auf den Spindelzapfen axial gesichert. Die Spindelzapfen müssen gelöst, das Werkzeug abgenommen, das neue Werkzeug aufgesetzt und die Spindelmutter angezogen werden. Dadurch ergeben sich verhältnismäßig lange Rüstzeiten.

Der Erfindung liegt die Aufgabe zugrunde, die gattungsgemäße Kehlmaschine so auszubilden, daß die Werkzeuge innerhalb kürzester Zeit gewechselt werden können.

Diese Aufgabe wird bei der gattungsgemäßen Kehlmaschine erfindungsgemäß mit den Merkmalen des Anspruches 1 gelöst.

Außerdem wird dadurch eine hohe Steifigkeit des Werkzeug-Spindel-Systems und damit eine hohe Bearbeitungsgüte erreicht.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer und perspektivischer Darstellung eine erfindungsgemäße Kehlmaschine,
- Fig. 2: in vergrößerter Darstellung und in Seitenansicht eine herkömmliche Spindel, die ein Werkzeug trägt,
- Fig. 3: teilweise in Seitenansicht eines und teilweise im Axialschnitt eine Ausführungsform Werkzeug-Spindel-Systems der erfindungsgemäßen Kehlmaschine,
- Fig. 4: im Axialschnitt eine Ausführungsform einer Spin- del,
- Fig. 5: eine obere Spindel mit Andruckelementen der Kehlma- schine gemäß Fig. 1,
- Fig. 6: das Prinzip des Jointens in der Kehlmaschine.

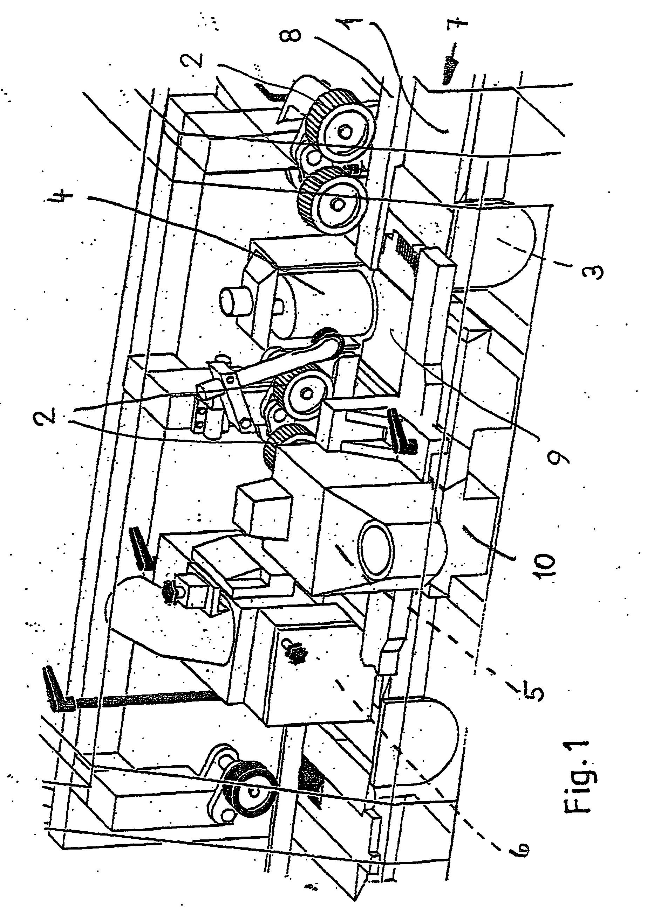

Die in Fig. 1 dargestellte Maschine ist eine Kehlmaschine, die zum Bearbeiten von Werkstücken aus Holz, Kunststoff und dergleichen dient. Der grundsätzliche Aufbau einer Kehlmaschine ist bekannt und wird darum nicht im einzelnen beschrieben. Die Kehlmaschine hat eine Transportbahn 1, auf der die zu bearbeitenden Werkstücke transportiert werden. Zum Transport der Werkstücke sind in bekannter Weise Transportwalzen 2 vorgesehen, die auf den Werkstücken aufliegen und drehbar angetrieben werden. Mit den Transportwalzen 2 werden die Werkstücke in bekannter Weise Werkzeugen 3 bis 6 zugeführt, mit denen die Werkstücke in noch zu beschreibender Weise bearbeitet werden.

Das Werkzeug 3 befindet sich im Bereich unterhalb der Transportbahn 1 und sitzt auf einer horizontalen Spindel, die drehbar angetrieben ist. Mit dem Werkzeug 3 wird die Unterseite des Werkstückes während seines Durchlaufes durch die Kehlmaschine bearbeitet. Die Transportbahn 1 ist im Bereich des Werkzeuges 3 unterbrochen, so daß seine Messer an die Unterseite des Werkstückes gelangen können.

In Transportrichtung 7 ist mit Abstand hinter dem Werkzeug 3 das um eine vertikale Achse drehbare Werkzeug 4 angeordnet. Es befindet sich, in Transportrichtung 7 gesehen, auf der rechten Seite der Transportbahn 1. Mit dem Werkzeug 4, das auf einer vertikalen Spindel drehfest sitzt, wird die in Transportrichtung 7 rechte Längsseite des Werkstückes bearbeitet. Damit die Werkstücke während ihres Transportes durch die Kehlmaschine einwandfrei gegenüber den Werkzeugen 3 bis 6 ausgerichtet sind, liegen die Werkstücke während ihres Transportes mit ihrer rechten Längsseite an einem Anschlaglineal 8 an, das im Bereich des Werkzeuges 4 für dessen Durchtritt unterbrochen ist.

Das Werkzeug 4 sitzt auf einem Querschieber 9, der sich vorzugsweise senkrecht zur Transportrichtung 7 der Werkstücke erstreckt. Mit dem Querschieber 9 kann das Werkzeug 4 quer, vorzugsweise senkrecht zur Transportrichtung 7 verschoben werden.

In Transportrichtung 7 hinter dem Werkzeug 4 befindet sich das Werkzeug 5, das sich auf der, in Transportrichtung 7 gesehen, linken Seite der zu bearbeitenden Werkstücke befindet. Dieses Werkzeug 5 sitzt drehfest auf einer vertikalen Spindel. Das Werkzeug 5 ist zusammen mit der zugehörigen Spindel auf einem weiteren Querschieber 10 gelagert, der quer, vorzugsweise senkrecht zur Transportrichtung 7 der Werkstücke verschoben werden kann. Die beiden Querschieber 9, 10 liegen mit Abstand voneinander. Die Oberseiten der Querschieber 9, 10 liegen vorteilhaft in einer Ebene mit der Oberseite der Transportbahn 1, so daß die Werkstücke beim Übergang von der Transportbahn 1 auf die Querschieber 9, 10 störungsfrei gefördert werden können. Die Oberseiten der Querschieber 9, 10 können aber auch tiefer liegen. Dann bilden separate Tischplatten in diesem Bereich die Transportbahn 1.

In Transportrichtung 7 hinter dem Werkzeug 5 liegt das Werkzeug 6, das drehfest auf einer horizontalen Spindel sitzt, die im Bereich oberhalb der Transportbahn 1 angeordnet ist. Mit dem Werkzeug 6 wird die Oberseite des Werkstückes bearbeitet, beispielsweise geradegehobelt. Es können weitere Werkzeuge folgen, wie zum Beispiel weitere untere Spindeln.

Auf der Kehlmaschine lassen sich die unterschiedlichsten Bearbeitungen der Werkstücke in einfacher Weise durchführen. Sind die Werkzeuge 3 bis 6 entsprechend Fig. 1 eingestellt, dann werden die Werkstücke, die längs des in Transportrichtung 7 sich erstreckenden Anschlaglineales 8 transportiert werden, zunächst mit dem Werkzeug 3 an ihrer Unterseite geradgehobelt. Unmittelbar anschließend wird mit dem Werkzeug 4 die in Transportrichtung 7 rechts liegende Längsseite des Werkstückes geradegehobelt. Mit dem linken Werkzeug 5 wird die in Transportrichtung 7 liegende linke Längsseite des Werkstückes geradegehobelt und damit die fertige Werkstückbreite bestimmt. Mit dem nachfolgenden Werkzeug 6 wird schließlich die Oberseite des Werkstückes geradgehobelt und damit die Dicke des fertigen Werkstückes bestimmt.

Die Werkzeuge 4, 5, 6 können auch Profilwerkzeuge sein, d.h. sie tragen Profilmesser, welche die gewünschte Profilgebung haben. Damit werden die entsprechenden Seiten des Werkstückes profiliert.

Nach dem Durchgang durch die Kehlmaschine sind die Werkstücke an den genannten Stellen bearbeitet worden. Die Werkstücke werden mit geringem Abstand hintereinander an den verschiedenen Werkzeugen 3 bis 6 vorbeigeführt, welche die entsprechenden Bearbeitungen an den Werkstücken vornehmen.

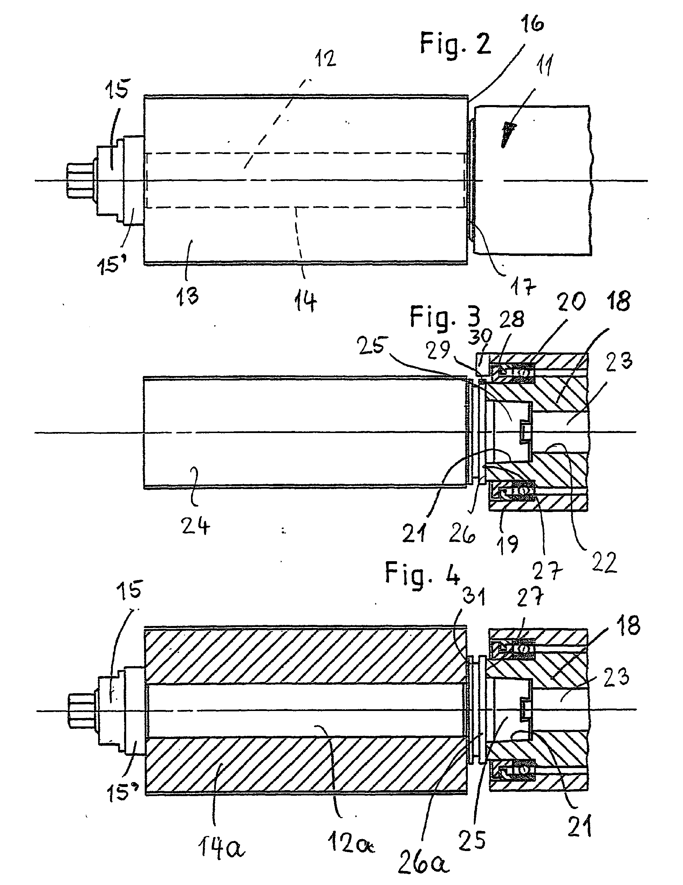

Bei herkömmlichen Kehlmaschinen haben die Spindeln 11, wie dies beispielhaft in Fig. 2 dargestellt ist, einen axialen Spindelzapfen 12, auf den ein Werkzeug 13 geschoben ist. Es hat eine entsprechende Durchgangsöffnung 14, durch welche der Spindelzapfen 12 ragt. Auf das über das Werkzeug 13 ragende Ende des Spindelzapfens 12 wird eine Spannmutter 15 geschraubt, mit welcher das Werkzeug 13 auf dem Spindelzapfen 12 festgespannt wird. Das Werkzeug 13 liegt unter der Kraft der Spannmutter 15 axial mit seiner einen Stirnseite 16 an einem Anlaufbund 17 an. Zwischen der Spannmutter 15 und dem Werkzeug 13 befindet sich ein Sicherungsring 15', der ein unbeabsichtigtes Lösen der Spannmutter 15 verhindert. Anstelle der Spannmutter 15 ist es möglich, das Werkzeug 13 über eine Hydrospannung auf dem Spindelzapfen 12 zu befestigen. In diesem Falle ist das Werkzeug 13 mit wenigstens einer unter Hydraulikdruck radial elastisch aufweitbaren Buchse versehen, mit der das Werkzeug 13 radial und zentrisch auf dem Spindelzapfen 12 gespannt wird. Auch hier ist ein Sicherungsring vorgesehen, der ein Lösen des Werkzeuges 13 vom Spindelzapfen 12 verhindert, falls der Hydraulikdruck unvorhergesehen abfallen sollte. Diese Werkzeuge sind konstruktiv aufwendig und teuer.

Die Kehlmaschine nach Fig. 1 weist Spindeln auf, wie sie in den Fig. 3 bzw. 4 dargestellt sind. Beim Ausführungsbeispiel nach Fig. 3 liegt die Spindel 18 in einer maschinenfesten Spindelhülse 19, in der die Spindel mit mindestens einem Lager 20 drehbar gelagert ist. Die Spindel 18 ist als Hohlspindel ausgebildet und weist an ihrem freien Ende eine Hohlschaftkegel-Aufnahme (HSK-Aufnahme) auf, die in eine zentrale, die Spindel 18 durchsetzende Axialöffnung 22 mündet. In ihr liegt eine Spanneinrichtung 23, die an sich bekannt ist und darum nicht näher beschrieben wird. In die Konus-Aufnahme 21 wird ein Werkzeug 24 mit einem entsprechenden Konus 25 eingesetzt. Die Spanneinrichtung 23 ergreift den Konus 25 und zieht ihn nach innen, so daß das Werkzeug 24 mit einem Bund 26 flächig gegen eine ebene Stirnseite 27 der Spindel 18 gezogen wird. Gleichzeitig wird das Werkzeug 24 einwandfrei radial gegenüber der Spindel 18 ausgerichtet. Um das Werkzeug 24 der Spindel 18 entnehmen zu können, wird die Spanneinrichtung 23 in bekannter Weise axial in Richtung auf das Werkzeug 24 verschoben. Der Konus 25 des Werkzeuges 24 ist so ausgebildet, daß in bekannter Weise Spannelemente der Spanneinrichtung 23 und Elemente zur Drehmomentübertragung eingreifen können. Die Betätigung der Spanneinrichtung 23 kann von Hand oder automatisch über zum Beispiel pneumatische oder hydraulische Spannelemente erfolgen. Damit ist ohne weiteres ein automatischer Werkzeugwechsel möglich.

Das Werkzeug 24 hat einen sehr kompakten Aufbau. Eine Durchgangsöffnung für einen Spindelzapfen ist nicht erforderlich. Dadurch hat das Werkzeug 24 einen kleinen Durchmesser. Dadurch kann das Werkzeug 24 mit wesentlich höheren Drehzahlen als das bekannte Werkzeug gemäß Fig. 2 drehbar angetrieben werden. Da das Werkzeug 24 mit seinem stirnseitigen Bund 26 gegen die Stirnseite 27 der Spindel 28 gezogen und gleichzeitig über den Konus zentriert wird, weist das Werkzeug 24 auch bei hohen Drehzahlen keinen Schlag auf und ist sehr steif mit der Spindel verbunden. Der Konus 25 ist einstückig mit dem Werkzeug 24 ausgebildet.

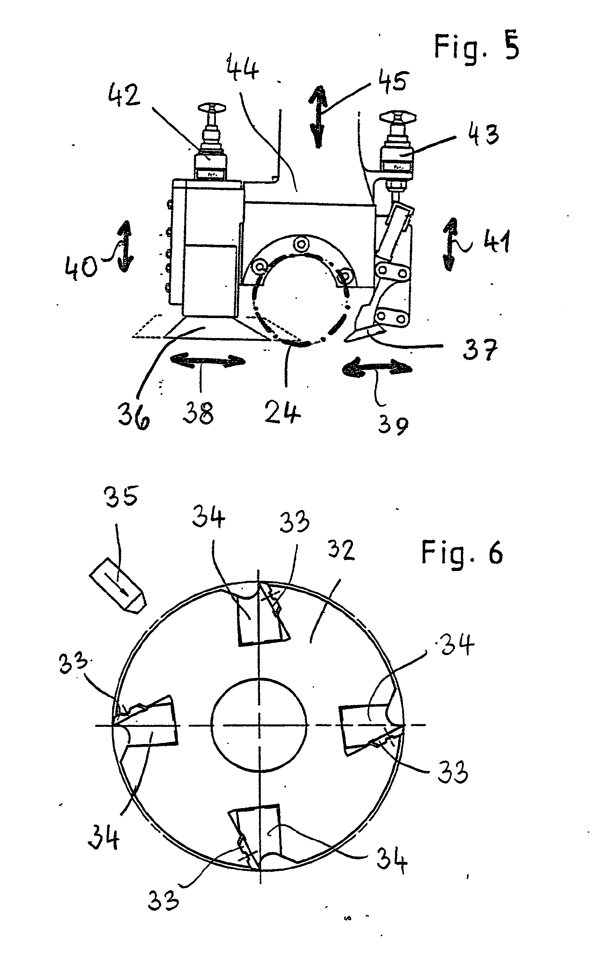

Das Lager 20, das sich mit Abstand vom freien Ende der Spindelhülse 19 befindet, ist nach außen durch wenigstens eine Dichtung 28 abgedichtet. Am Bund 26 des Werkzeuges 24 ist ein Transponder 29 angeordnet, auf dem werkzeugspezifische Daten angegeben sind, die mit einem an der Spindelhülse 19 vorgesehenen Lesekopf 30 erfaßt werden können. Diese werkzeugspezifischen Daten können beispielsweise der Durchmesser und die Länge des Werkzeuges 24, die Art der Schneiden am Werkzeug 24, die notwendige Lage dieses Werkzeuges 24 innerhalb der Kehlmaschine und dergleichen sein. Vorteilhaft werden die vom Lesekopf 30 erfaßten Daten einem Rechner oder einer Steuerung übermittelt, die anhand dieser erfaßten werkzeugspezifischen Daten die Kehlmaschine entsprechend automatisch einstellt, wie dies anhand von Fig. 5 beispielhaft erläutert werden wird. Die Anordnung von Transponder und Lesegerät kann konstruktiv auch anders gewählt werden.

Fig. 4 zeigt die Möglichkeit, in eine Konus-Aufnahme 21 einer Spindel 18 einen Spindelzapfen 12a einzusetzen, der an einem Ende mit dem Konus 25 versehen, vorzugsweise einstückig mit ihm ausgebildet ist. Zwischen dem Werkzeug 14a und dem Konus 25 befindet sich der Bund 26a, der vorzugsweise einstückig mit dem Konus 25 ausgebildet ist. Mit dem Bund 26a liegt das auf dem Spindelzapfen 12a sitzende Werkzeug 14a unter der Zugspannung der Spanneinrichtung 23 flächig an der ebenen Stirnseite 27 der Spindel 18 an.

Das Werkzeug 14a liegt an einem Anschlagbund 31 an, der dem Bund 26a mit geringem Abstand gegenüberliegt. Auch der Anschlagbund 31 ist vorteilhaft einstückig mit dem Konus 25 ausgebildet. Auf das über das Werkzeug 14a ragende Ende des Spindelzapfens 12a ist die Spannmutter 15 geschraubt, mit der über den Sicherungsring 15' das Werkzeug 14a fest gegen den Anschlagring 31 gedrückt wird.

Diese Ausführungsform ist für Standardwerkzeuge geeignet, wie sie auch bei den heutigen Spindeln 11 gemäß Fig. 2 eingesetzt werden. Der Spindelzapfen 12a ist im Gegensatz zur bekannten Spindelausbildung gemäß Fig. 2 an dem der Spannmutter 15 gegenüberliegenden Ende mit dem Konus 25 versehen, der in die Konus-Aufnahme 21 der Spindel 18 eingesetzt und mittels der Spanneinrichtung 23 in der Konus-Aufnahme verspannt wird. Die Spanneinrichtung 23 ist in bekannter Weise so ausgebildet, daß der Konus 25 nicht nur in die Konus-Aufnahme 21 gezogen, sondern auch drehfest mit der Spindel 18 verbunden wird. Auch bei der Ausführungsform gemäß Fig. 3 erfolgt eine solche drehfeste Verbindung zwischen der Spindel 18 und dem Konus 25.

Auch das Werkzeug 14a gemäß Fig. 4 läßt sich innerhalb kürzester Zeit ein- und auswechseln. Es ist nicht erforderlich, zunächst die Spannmutter 15 zu entfernen, um das Werkzeug von der Spindel abnehmen zu können. Vielmehr wird die Spanneinrichtung 23 in die Lösestellung bewegt, so daß das Werkzeug 14a zusammen mit dem Spindelzapfen 12a der Spindel 18 entnommen werden kann. Dieser Wechselvorgang kann entsprechend dem vorigen Ausführungsbeispiel vollautomatisch vorgenommen werden.

Auch bei dieser Ausführungsform kann am Bund 26a ein Transponder vorgesehen sein, der die werkzeugspezifischen Daten enthält, die mit dem Lesegerät gelesen und weitergeleitet werden können.

Durch den Einsatz der Konusaufnahme 21 gemäß den beschriebenen Ausführungsformen ist ein Jointen in der Kehlmaschine möglich. Fig. 6 zeigt beispielhaft ein Werkzeug 32, das über den Umfang verteilt angeordnete Schneidmesser 33 aufweist, deren Kanten gerade oder profiliert sein können. Die Schneidmesser 33 sind im Werkzeug 32 in bekannter Weise mit Spannelementen 34 verspannt. Um die Schneidmesser 33 auf denselben Bearbeitungsflugkreis abzurichten oder nachzuschärfen, wird ein Jointstein 35 verwendet, der so in bezug auf das Werkzeug 32 eingestellt wird, daß bei rotierendem Werkzeug 32 die Schneidmesser 33 mit ihren Schneiden mit dem Jointstein 35 in Berührung kommen und dabei abgerichtet bzw. geschärft werden. Sind die Schneiden der Schneidelemente 33 gerade, wird der Jointstein 35 während des Jointvorganges axial verfahren, so daß die Schneiden der Schneidmesser 33 über ihre Länge abgerichtet bzw. geschärft werden.

Sind die Schneidmesser 33 hingegen Profilmesser, weist der Jointstein 35 ein entsprechendes Gegenprofil auf. In diesem Falle wird der Jointstein lediglich radial zugestellt, wobei die Schneiden der Schneidmesser 33 des rotierenden Werkzeuges 32 mit dem Gegenprofil des Jointsteins 35 in Berührung kommen und die Schneiden entsprechend abgerichtet bzw. nachgeschärft werden.

Um dieses Jointen in der Praxis zuverlässig einsetzen zu können, ist es erforderlich, daß die Werkzeuge schon mit einer sehr hohen Rundlaufgenauigkeit auf einer Schleifmaschine geschliffen sind und mit einer sehr hohen Zentriergenauigkeit in die Kehlmaschine eingesetzt werden. Dies ist bisher nur durch den Einsatz der zuvor beschriebenen Hydrospannung möglich, da die Werkzeuge durch die Radialspannung sowohl in der Schleifmaschine als auch in der Kehlmaschine zentrisch gespannt werden. Bei den axial verspannten Standardwerkzeugen hingegen müssen Spindelzapfen und Bohrung eine gewisse Luft aufweisen. Damit ist eine hohe Rundlaufgenauigkeit jedoch nicht gewährleistet und ein Jointen bei den herkömmlichen Spindeln in der Regel nicht praxistauglich.

Demgegenüber wird durch den Einsatz der Konusaufnahme 21 eine hohe Rundlaufgenauigkeit gewährleistet, so daß nun auch ein Standardwerkzeug gejointet werden kann, sofern es zusammen mit dem Spindelzapfen 12a in der Schleifmaschine geschliffen wird. Selbstverständlich ist damit auch das Werkzeug 24 gemäß Fig. 3 jointbar.

Fig. 5 zeigt beispielhaft anhand der oberen Spindel die Möglichkeit, aufgrund der durch den Lesekopf 30 erfaßten Daten des Transponders 29 des jeweiligen Werkzeuges 24, 14a eine das Werkzeug teilweise umgebende Absaughaube sowie die daran vorgesehenen Andruckelemente automatisch zu verstellen. Das Werkzeug ist mit einer strichpunktierten Linie dargestellt. Unmittelbar vor und hinter dem Werkzeug 24 befinden sich Andruckelemente 36, 37, die so nah wie möglich an den Flugkreis des Werkzeuges 24 reichen sollen, um eine gute Bearbeitungsqualität zu erzielen. Hierzu sind die Andruckelemente 36, 37 quer zur Achse des Werkzeuges 24 in Richtung der Doppelpfeile 38, 39 verstellbar. Diese Verstellung kann von Hand mittels entsprechender Einstellelemente erfolgen. Außerdem ist es möglich, die Andruckelemente 36, 37 senkrecht zu den Verstellrichtungen 38, 39 in Richtung der Doppelpfeile 40, 41 zu verstellen. Somit ist eine optimale Anpassung der Andruckelemente 36, 37 an im Durchmesser unterschiedliche Werkzeuge 24 möglich. Für die Einstellung der Andruckelemente 36, 37 können Einstellelemente 42, 43 vorgesehen sein, mit denen diese Einstellungen von Hand vorgenommen werden können. Vorteilhaft ist es jedoch, diese Verstellungen automatisch motorisch vorzunehmen. Die Andruckelemente 36, 37 sowie die Einstellelemente 42, 43 können an einer Absaughaube 44 vorgesehen sein, die das Werkzeug 24 nach oben abdeckt und durch welche die bei der Bearbeitung der Werkstücke anfallenden Späne abgesaugt werden. Die Absaughaube 44 ist wie die Werkzeugspindel an einem (nicht dargestellten) Schieber montiert, der in Höhenrichtung 45 von Hand oder vorzugsweise motorisch verstellt werden kann, je nachdem, welche Werkstückdicke bearbeitet werden soll. Die beschriebenen Verstellrichtungen können auch schräg zur Transportrichtung der Werkstücke verlaufen.

Die erforderlichen Verstellungen der Andruckelemente 36, 37 und des Schiebers können auf dem Transponder 29 gespeichert sein. Wird darum das entsprechende Werkzeug 24 in die Spindel 18 eingewechselt, werden mit dem Lesegerät 30 die entsprechenden Daten ausgelesen und einer Steuerung zugeführt, die die entsprechenden Verstellungen der Andruckelemente 36, 37 und/oder des Schiebers automatisch vornimmt. Es ist auch möglich, die ausgelesenen Werte anzuzeigen und entsprechend den angezeigten Werten die notwendigen Verstellungen von Hand vorzunehmen.

Bei Einsatz von Profilmessern ist zusätzlich das Werkzeug axial zu verstellen. Auch diese Einstellwerte sind auf dem Transponder 29 gespeichert und können darum von Hand oder automatisch eingestellt werden.

Selbstverständlich können auch werkstückspezifische Daten, wie fertige Werkstückmaße, Holzart, erforderliche Holzmenge und dergleichen, auf dem Transponder gespeichert sein.

Die gleiche Einrichtung kann auch für die anderen Spindeln, wie die rechte und/oder linke Spindel, vorgesehen werden.

## Patentansprüche

1. Kehlmaschine mit mehreren auf drehbar angetriebenen Spindeln (18) sitzenden Werkzeugen (3 bis 6, 24) zur mehrseitigen Bearbeitung von Werkstücken aus Holz, Kunststoff und dergleichen im Durchlaufverfahren, wobei die Spindeln mit den Werkzeugen kuppelbar sind, und wobei die Werkzeuge (3 bis 6, 24) am Umfang mit Schneidemessern (33) versehen sind, **dadurch gekennzeichnet, dass** mindestens eine der Spindeln (18) eine HSK Konus-Aufnahme (21) aufweist, die einen werkzeugseitigen HSK-Konus (25) aufnimmt, dass der Konus (25) Teil des Werkzeuges (24) ist und unter Verzicht einer für einen Spindelzapfen vorgesehenen Durchgangsöffnung im Werkzeug (24) einstückig mit ihm ausgebildet ist, das Werkzeug (24) mit einem Bund (26) an der Stirnseite (27) der Spindel (18) anliegt und der Bund (26) am Werkzeug (24) vorgesehen und einstückig mit ihm ausgebildet ist, dass der HSK-Konus (25) mit einer Spanneinrichtung (23) in der HSK-Konus-Aufnahme (21) festspannbar ist, und dass das Werkzeug (24) an der Stirnseite (27) der Spindel (18) mit dem Bund (26) flächig abgestützt ist.

2. Kehlmaschine nach Anspruch 1,
**dadurch gekennzeichnet, dass** die Spindel (18) in einer kehlmaschinenfesten Spindelhülse (19) drehbar gelagert ist.

3. Kehlmaschine, insbesondere nach Anspruch 1 oder 2, **dadurch gekennzeichnet, dass** werkzeugseitig mindestens ein Transponder (29) vorgesehen ist, der werkzeugrelevante Daten enthält und dem kehlmaschinenseitig ein Lesekopf (30) zugeordnet ist.

4. Kehlmaschine nach Anspruch 3,
**dadurch gekennzeichnet, dass** der Lesekopf (30) an eine Steuerung der Kehlmaschine angeschlossen ist.

## Claims

1. Shaping machine comprising a plurality of tools (3 to 6, 24) fitted on rotatably driven spindles (18) for multilateral machining of workpieces made of wood, plastics material and the like in a continuous operation, it being possible to couple the spindles to the tools and the tools (3 to 6, 24) being provided on the periphery thereof with cutting edges (33), **characterised in that** at least one of the spindles (18) comprises an HSK taper chuck (21) which receives an HSK taper (25) on the tool side,
**in that** the taper (25) is part of the tool (24) and is formed integrally therewith without a port being provided in the tool for a spindle pin,
the tool (24) abuts a collar (26) on the end face (27) of the spindle (18) and the collar (26) is provided on the tool (24) and is integrally formed therewith,
**in that** the HSK taper (25) can be clamped in the HSK taper chuck (21) by means of a clamping device (23), (18) and **in that** the tool (24) is supported on the end face (27) of the spindle (18) in a planar manner by means of the collar (26).

2. Shaping machine according to claim 1,
**characterised in that** the spindle (18) is rotatably mounted in a spindle sleeve (19) fixed to the shaping machine.

3. Shaping machine, in particular according to either claim 1 or claim 2,
**characterised in that** at least one transponder (29) is provided on the tool side, which transponder contains data relevant to the tool and is associated with a reading head (30) on the shaping machine side.

4. Shaping machine according to claim 3,
**characterised in that** the reading head (30) is connected to a control means of the shaping machine.

## Revendications

1. Machine à moulurer ou moulurière, comprenant plusieurs outils (3 à 6, 24) placés sur des broches (18) entraînées en rotation, pour l'usinage multi-faces de pièces d'oeuvre en bois, matière plastique et matériaux similaires, selon un processus de passage en continu, les broches pouvant être couplées aux outils, et les outils (3 à 6, 24) étant pourvus, sur leur périphérie, de plaquettes ou lames de coupe (33),
**caractérisée en ce que** l'une au moins des broches (18) présente un logement à cône HSK (21), qui reçoit un cône HSK (25) côté outil,
**en ce que** le cône (25) fait partie de l'outil (24) et est réalisé d'un seul tenant avec celui-ci, en permettant ainsi de renoncer à toute ouverture de passage dans l'outil (24) prévue pour un embout de broche,
l'outil (24) s'appuyant avec une embase (26) contre la face frontale (27) de la broche (18),
et l'embase (26) étant prévue sur l'outil (24) et réalisée d'un seul tenant avec celui-ci,
**en ce que** le cône HSK (25) peut être serré à l'aide d'un dispositif de serrage (23) dans le logement à cône HSK (21),
et **en ce que** l'outil (24) s'appuie avec la surface de son embase (26) sur la face frontale (27) de la broche (18).

2. Machine à moulurer selon la revendication 1,
**caractérisée en ce que** la broche (18) est montée rotative dans un fourreau de broche (19) fixe de la machine à moulurer.

3. Machine à moulurer notamment selon la revendication 1 ou la revendication 2,
**caractérisée en ce que** du côté de l'outil est prévu au moins un transpondeur (29), qui contient des données relatives à l'outil et auquel est associée une tête de lecture (30) côté machine à moulurer.

4. Machine à moulurer selon la revendication 3,
**caractérisée en ce que** la tête de lecture (30) est raccordée à une commande de la machine à moulurer.
